# EUROPEAN PATENT APPLICATION

(11) **EP 2 175 112 A1**
(43) Date of publication of application: **14.04.2010**
(21) Application number: 08777797.5
(22) Date of filing: 02.07.2008
(51) Int. Cl.: F01N 3/08, B01D 53/94, F01N 3/24, F01N 3/28, F02D 45/00

(54) **ENGINE POWERED MACHINE**

(30) Priority: 03.07.2007 JP 2007175466
(71) Applicant: Hitachi Construction Machinery Co., Ltd, Tokyo 112-0004 (JP)
(72) Inventor: KAMIYA, Shohei, Tsuchiura-shi Ibaraki 300-0013 (JP); NAKAMURA, Kazunori, Tsuchiura-shi Ibaraki 300-0013 (JP); ARAI, Yasushi, Tsuchiura-shi Ibaraki 300-0013 (JP)
(74) Representative: Hatzmann, Martin
(86) International application number: PCT/JP2008/061997
(87) International publication number: WO 2009/005092

(57) **Abstract**

[PROBLEM] To provide an engine powered machine provided with an economical exhaust gas purification system capable of avoiding overheating of a reducing agent.

[SOLUTION] In an engine powered machine provided with an exhaust gas purification system that injects a reducing agent into an exhaust pipe 2 of an engine 1 by a reducing agent feeder 4 to detoxify nitrogen oxides in exhaust gases, a cooling fan 7 the driving or stopping of which is controlled by a controller 12 is arranged as a cooling device for a reducing agent tank 5 in which the reducing agent to be injected by the reducing agent feeder 4 is stored. When a detected temperature signal a outputted from a reducing agent temperature detector 6 has become higher than a cooling initiation temperature stored in a storage unit 12b, the controller 12 drives the cooling fan 7 to initiate cooling of the reducing agent tank 5.

## Description

### Technical Field

This invention relates to a machine equipped with an engine as a power source (engine powered machine) such as a construction machine or automotive vehicle, and especially to a temperature control means for an exhaust gas purification system, which detoxifies nitrogen oxides in exhaust gases by using an NOx removal catalyst and a reducing agent added thereto, in an engine powered machine provided with the exhaust gas purification system.

### Background Art

Known exhaust gas purification systems to be mounted on engine powered machines include one provided with an NOx removal catalyst arranged in an exhaust pipe and a reducing agent feeder for injecting a reducing agent, which is stored in a reducing agent tank, from a side upstream of the arranged location of the NOx removal catalyst to selectively subject nitrogen oxides in exhaust gases to reduction treatment with the reducing agent in the presence of the NOx removal catalyst such that the nitrogen oxides are decomposed into harmless nitrogen gas and water. Usable as the reducing agent is a urea water that undergoes hydrolysis in the exhaust pipe and is changed into ammonia having good reactivity with nitrogen oxides, an aqueous ammonia solution, gas oil containing hydrocarbons as principal components, or the like.

When brought into a supercooled state, such a reducing agent freezes so that it can no longer be injected into an exhaust pipe. When brought into an overheated state, on the other hand, its component(s) vaporize(s) to produce an offensive odor. Further, a variation in the concentration of the reducing agent due to freezing or overheating develops an inconvenience such that a restriction would be placed on start-up of an engine by a signal from a concentration sensor arranged in the reducing agent tank. Certain keep-warm measures are, therefore, needed such that the reducing agent can be maintained within an appropriate temperature while being stored in the reducing agent tank. Conventionally-proposed keep-warm measures for a reducing agent stored in a reducing agent tank include those in which a heat exchanger is arranged in the reducing agent tank, a cooling circulation passage equipped with a radiation device is connected to a circulation passage for an engine cooling medium via three-way cocks, the three-way cocks are switched toward the cooling medium circulation passage to guide a cooling medium of a high temperature, which is flowing through the cooling medium circulation passage, to the heat exchanger in the reducing agent tank when the reducing agent has come into a supercooled state, and the three-way cocks are switched toward the cooling circulation passage to guide the cooling medium of a low temperature, which is flowing through the cooling circulation passage, to the heat exchanger in the reducing agent tank when the reducing agent has come into an overheated state (see, for example, Patent Document 1).

Further, proposed anti-freezing means for a reducing agent tank mounted on a construction machine include a technology in which the reducing agent tank is arranged in an engine compartment, near a hydraulic pump, in an operator's cab, near a hydraulic oil tank, or near a hydraulic motor (see, for example, Patent Document 2).
Patent Document 1: JP-A-2005-83223
Patent Document 2: JP-A-2003-20936

### Disclosure of the Invention

### Problem to Be Solved by the Invention

However, the technology disclosed in Patent Document 1 requires, as cooling means for the reducing agent stored in the reducing agent tank, the heat exchanger, cooling medium circulation passage, three-way cocks, radiation device and cooling circulation passage, and therefore, is accompanied by problems that the exhaust gas purification system becomes large and the system, and consequently, the engine powered machine provided with the system become highly costly.

On the other hand, the technology disclosed in Patent Document 2 is advantageous in cost, but involves a problem that the reducing agent in the reducing agent tank is prone to overheating depending on the operational status of the engine powered machine because the reducing agent tank is arranged in a compartment or cab of a relatively high temperature and is provided with no cooling means.

With a view to solving such problems of the conventional technologies, an object of the present invention is to provide an engine powered machine provided with an economical exhaust gas purification system capable of avoiding overheating of a reducing agent.

### Means for Solving the Problem

To solve the above-describedproblems, the present invention has been firstly constituted to be provided with an NOx removal catalyst arranged in an exhaust passage of an engine to selectively subject to reduction treatment nitrogen oxides that flow through the exhaust passage, a reducing agent tank for storing a reducing agent, a reducing agent feeder for injecting into the exhaust passage the reducing agent stored in the reducing agent tank, a reducing agent temperature detector for detecting a temperature of the reducing agent stored in the reducing agent tank, a cooling fan for cooling the reducing agent tank, and a controller for receiving a detected temperature signal outputted from the reducing agent temperature detector and controlling drive of the cooling fan, wherein the controller has an input port for receiving the detected temperature signal, a storage unit in which a cooling initiation temperature for the reducing agent tank is stored, a computing unit for comparing the detected temperature signal with the cooling initiation temperature and, when the detected temperature signal has become equal to or higher than the cooling initiation temperature, outputting a drive signal for the cooling fan, and an output port for outputting the drive signal.

According to such a constitution, when the detected temperature signal outputted from the reducing agent temperature detector has become equal to or higher than the cooling initiation temperature stored in the storage unit, the computing unit of the controller outputs the drive signal for the cooling fan to drive the cooling fan. It is, therefore, possible to avoid overheating of the reducing agent stored in the reducing agent tank, and consequently, production of an offensive odor. Further, this constitution can be economically put into practice because it is only necessary to arrange the cooling fan at a predetermined location as an anti-overheating means for the reducing agent.

The present invention is secondly constituted such that in the engine powered machine of the above-described first constitution, the reducing agent is a urea water, and the cooling initiation temperature is +35°C.

Exhaust gas purification systems that make use of a urea water are most widely employed as exhaust gas purification systems for diesel engines and gasoline engines, and moreover, have been established technically. The use of such an exhaust gas purification system can, therefore, realize stable purification of exhaust gases. As a urea water vaporizes at about +40°C and produces an ammonia odor, the production of an ammonia odor can be avoided by initiating the drive of the cooling fan at +35°C which is lower than the vaporization temperature of the urea water.

The present invention is thirdly constituted such that in the engine powered machine of the above-described first constitution, the reducing agent tank is provided on an outer wall thereof with cooling fins.

The arrangement of the cooling fins on the outer wall of the reducing agent tank can improve the efficiency of release of heat from the reducing agent tank, and therefore, the cooling effect for the reducing agent tank by the cooling fan can be enhanced further.

The present invention is fourthly constituted such that in the engine powered machine of the above-described first constitution, an electric motor or hydraulic motor is used as a power source for the cooling fan.

The use of an electric motor as a power source for the cooling fan makes it possible to cool the reducing agent tank by simply arranging the cooling fan and installing necessary wiring, thereby making it possible to put an exhaust gas purification system, which is provided with a cooling apparatus for the reducing agent tank, into practice at low cost. On the other hand, the use of a hydraulic motor as a power source for the cooling fan makes it possible to achieve effective utilization of power in an engine powered machine of the hydraulic drive type, such as a hydraulic excavator, that uses pressure oil as a power source for various components in the machine.

### Advantageous Effects of the Invention

The engine poweredmachine according to the present invention is provided with the cooling fan for the reducing agent tank and, when the detected temperature signal outputted from the reducing agent temperature detector has become equal to or higher than the cooling initiation temperature stored in the storage unit, the cooling fan is driven based on the drive signal for the cooling fan as outputted from the computing unit of the controller. It is, therefore, possible to avoid overheating of the reducing agent stored in the reducing agent tank, and consequently, production of an offensive odor. Further, the engine powered machine according to the present invention can be economically put into practice, because it is only necessary to arrange the cooling fan as an anti-overheatingmeans for the reducing agent.

### Best Modes for Carrying out the Invention

One embodiment of the engine powered machine according to the present invention will hereinafter be described based on FIG. 1 to FIG. 4, in which FIG. 1 is a constitution diagram of the engine powered machine according to this embodiment, FIG. 2 is a block diagram showing the constitution of a controller in this embodiment, FIG. 3 is a cross-sectional view of a reducing agent tank in this embodiment, and FIG. 4 is a table showing operation temperatures of a reducing agent feeder, cooling fan and on/of f device in this embodiment.

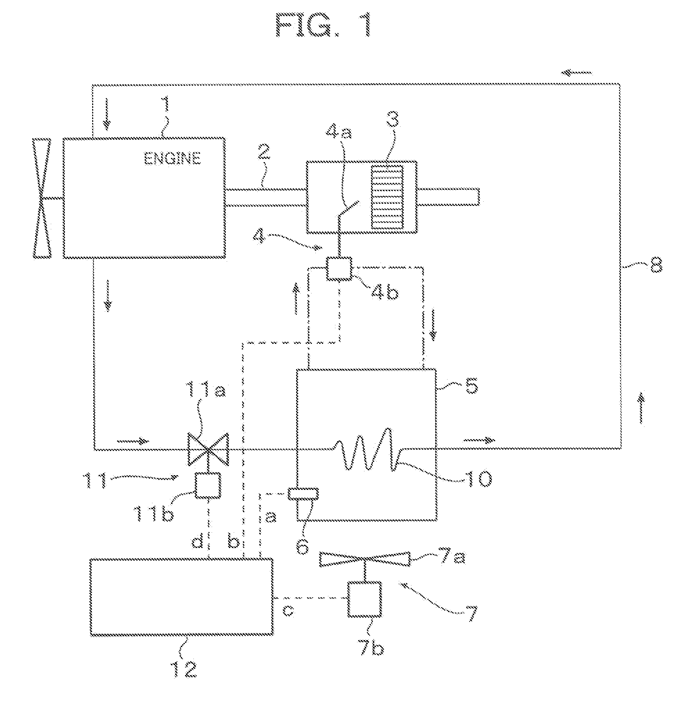

As depicted in FIG. 1, the engine powered machine of this embodiment is provided with an engine 1 as a power source for individual components of the machine, an NOx removal catalyst 3 arranged in an exhaust pipe (exhaust passage) 2 of the engine 1, a reducing agent feeder 4 for injecting an NOx reducing agent into the exhaust pipe 2 on a side upstream of the arranged location of the NOx removal catalyst 3, a reducing agent tank 5 for storing the reducing agent to be injected by the reducing agent feeder 4, a reducing agent temperature detector 6 for detecting a temperature of the reducing agent stored in the reducing agent tank 5, a cooling fan 7 for the reducing agent tank 5, a cooling medium flow passage 8 for guiding a portion of an engine cooling medium to the reducing agent tank 5, a reducing agent heater 10 for heating the reducing agent, which is stored in the reducing agent tank 5, with heat of the engine cooling medium flowing through the cooling medium flow passage 8, an on/off device 11 for opening/closing the cooling medium flow passage 8, and a controller 12 for receiving a detected temperature signal **a** outputted from the reducing agent temperature detector 6 and outputting drive signals **b,c,d** for the reducing agent feeder 4, cooling fan 7 and on/off device 11.

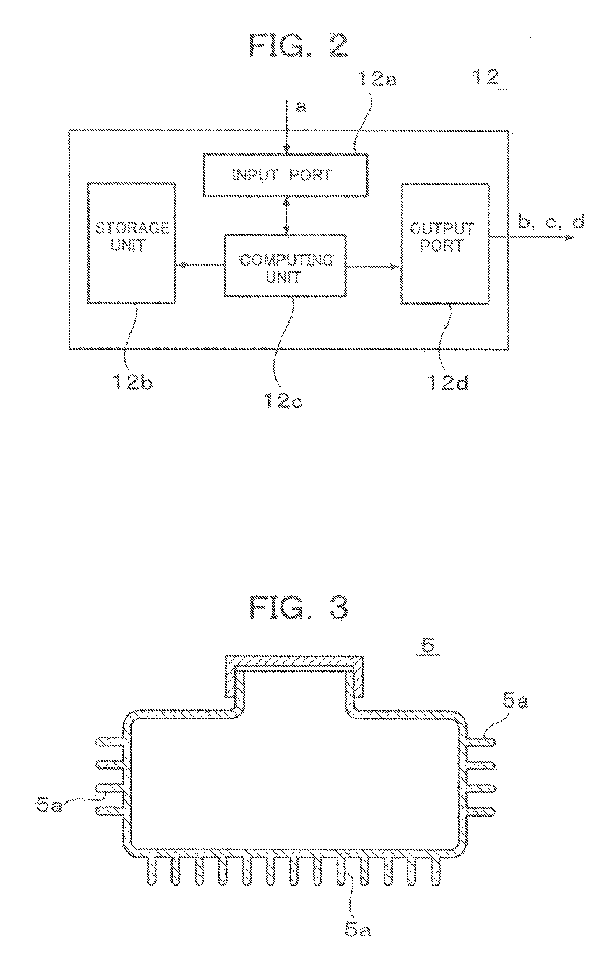

As shown in FIG. 2, the controller 12 is comprised of an input port 12a, a storage unit 12b, a computing unit 12c, and an output port 12d. The input port 12a receives the detected temperature signal **a.** In the storage unit 12b, a cooling initiation temperature for the reducing agent tank 5 and an injection initiation temperature for the reducing agent feeder 4 are stored. The computing unit 12c compares the detected temperature signal **a** with the cooling initiation temperature and, when the detected temperature signal **a** has become equal to or higher than the cooling initiation temperature, outputs the drive signal **c** for the cooling fan 7 and the drive signal **d** for the on/off device 11. The computing unit 12c also compares the detected temperature signal **a** with the injection initiation temperature and, when the detected temperature signal **a** has become equal to or higher than the injection initiation temperature, outputs the drive signal **b** for the reducing agent feeder 4. The output port 12d outputs the drive signals **b,c,d**. The cooling initiation temperature for the reducing agent tank 5 is set at a temperature slightly lower than the vaporization temperature of the reducing agent, for example, at a temperature slightly lower than +40°C at which ammonia is produced, for example, +35°C when a urea water is used as the reducing agent. On the other hand, the injection initiation temperature for the reducing agent feeder 4 is set at a temperature slightly higher than the freezing temperature of the reducing agent, for example, at a temperature higher than -11°C at which the urea water freezes, for example, 0°C when the urea water is used as the reducing agent.

The NOx removal catalyst 3, reducing agent feeder 4 and reducing agent tank 5 make up the exhaust gas purification system described in the above-cited Patent Document 1. The reducing agent stored in the reducing agent tank 5, such as a urea water, an aqueous ammonia solution or gas oil containing hydrocarbons as principal components, is injected in the form of a mist into the exhaust pipe 2 by the reducing agent feeder 4, and nitrogen oxides in exhaust gases are selectively subjected to reduction treatment with the reducing agent in the presence of the NOx catalyst 3 to decompose the nitrogen oxides into harmless nitrogen gas and water. When a urea water is used as the reducing agent, the urea water injected into the exhaust pipe 2 is subjected to hydrolysis with the heat of exhaust gases to produce ammonia having good reactivity with nitrogen oxides, and by the thus-produced ammonia, nitrogen oxides are selectively subjected to reduction treatment. Depending on the exhaust rate and exhaust temperature, the injection rate of the reducing agent into the exhaust pipe 2 is controlled to such a range that the nitrogen oxides in exhaust gases can be substantially removed while avoiding leaving the reducing agent as a surplus. The reducing agent feeder 4 is comprised of a nozzle 4a and an injection device 4b for injecting the reducing agent, which is stored in the reducing agent tank 5, in the form of a mist through the nozzle 4a, and the driving or stopping of the injection device is controlled by the drive signal **b** outputted from the controller 12.

The reducing agent tank 5 is formed of plastics, stainless steel plates or the like, and at necessary locations on outer walls, cooling fins 5a are arranged as illustrated in FIG. 3. Their arrangement has made it possible to reduce the size of the cooling fan 7 and also to achieve efficient cooling by blowing air. The reducing agent tank 5 can be arranged at a desired location on the engine powered machine. It is, however, desired to arrange the reducing agent tank 5 at a location from which an offensive odor is not allowed to penetrate into the operator's cab even if the offensive odor is produced, for example, within a utility compartment in the case of a construction machine or under a body in the case of a truck. When the reducing agent tank 5 is arranged within a compartment such as a utility compartment, formation of a vent hole on a downstream side of air-blowing is particularly desired to enhance the efficiency of cooling by the cooling fan 7.

The cooling fan 7 is comprised of rotating blades 7a and a motor 7b for rotationally driving the rotating blades 7a, and the driving or stopping of the motor 7b is controlled by the drive signal c outputted from the controller 12. As the motor 7b, an electric motor can be used, or a hydraulic motor can also be used. The use of an electric motor as the motor 7b for the cooling fan 7 makes it possible to cool the reducing agent tank 5 by simply arranging the cooling fan 7 and installing necessary wiring, thereby making it possible to put an exhaust gas purification system, which is provided with a cooling apparatus for the reducing agent tank, into practice at low cost. On the other hand, the use of a hydraulic motor as the motor 7b for the cooling fan 7 makes it possible to achieve effective utilization of power in an engine powered machine, such as a hydraulic excavator, that uses pressure oil as a power source for various components in the machine.

The on/off device 11 is comprised of a valve element 11a for opening or closing the coolingmedium flow pas sage 8 and an actuator 11b, such as a solenoid, for driving the valve element, and the switched position of the valve element 11a is controlled by the drive signal **d** outputted from the controller 12.

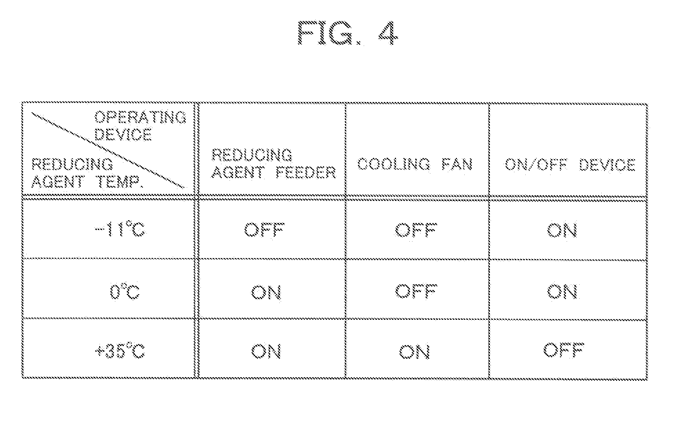

Using FIG. 4, a description will hereinafter be made of operation of the reducing agent feeder 4, cooling fan 7 and on/off device 11. It is to be noted that FIG. 4 illustrates by way of example a case in which a urea water was used as a reducing agent, -11°C is the freezing temperature of the urea water, 0°C is an injection initiation temperature for the reducing agent feeder 4, and +35°C is a cooling initiation temperature for the reducing agent tank 5. In FIG. 4, the sign "OFF" shown in the column for the reducing agent feeder 4 indicates that the injection of the reducing agent by the reducing agent feeder 4 is in a stopped state, while the sign "ON" indicates that the injection of the reducing agent by the reducing agent feeder 4 is under execution. The sign "OFF" shown in the column for the cooling fan 7 indicates that the cooling fan 7 is in a stopped state, while the sign "ON" indicates that the cooling fan 7 is in a driven state. Further, the sign "OFF" shown in the column for the on/off device 11 indicates that the feeding of the engine cooling medium to the reducing agent heater 10 is in a stopped state, while the sign "ON" indicates that the engine cooling medium is in a state of being fed to the reducing agent heater 10.

As is evident from this table, when the temperature of the reducing agent in the reducing agent tank 5 is equal to or higher than the injection initiation temperature (0°C), the reducing agent feeder 4 receives a drive signal **b** outputted from the controller 12 and is driven to perform the injection of the reducing agent into the exhaust pipe 2. As a consequence, it is possible to conduct the purification of engine exhaust gases flowing through the exhaust pipe 2. When the temperature of the reducing agent in the reducing agent tank 5 is lower than the injection initiation temperature (0°C), on the other hand, the reducing agent feeder 4 receives a drive signal **b** outputted from the controller 12 and its driving is stopped. As a consequence, it is possible to avoid clogging of an unillustrated injection nozzle with pieces of ice or the like.

When the temperature of the reducing agent in the reducing agent tank 5 has arisen to the cooling initiation temperature (+35°C), the cooling fan 7 receives a drive signal **c** outputted from the controller 12 and its driving is initiated to cool the reducing agent stored in the reducing agent tank 5. On the other hand, the operation of the on/off device 11 is opposite to that of the cooling fan 7 and, when the temperature of the reducing agent in the reducing agent tank 5 has arisen to the cooling initiation temperature (+35°C), the on/off device 11 receives a drive signal **d** outputted from the controller 12, and the feeding of the engine cooling medium to the reducing agent heater 10 is stopped to permit efficient cooling of the reducing agent by the cooling fan 7. By controlling the driving of the cooling fan 7 and on/off device 11 as described above, the temperature of the reducing agent in the reducing agent tank 5 can be maintained within an appropriate temperature range.

When the detected temperature signal **a** outputted from the reducing agent temperature detector 6 has become equal to or higher than the cooling initiation temperature stored in the storage unit 12b in the engine powered machine according to this embodiment, the computing unit 12c of the controller 12 outputs the drive signal **c** for the cooling fan 7 to rotationally drive the cooling fan 7. It is, therefore, possible to avoid overheating of the reducing agent stored in the reducing agent tank 5, and consequently, production of an offensive odor. Further, the engine powered machine can be economically put into practice because it is only necessary to arrange the cooling fan 7 as an anti-overheating means for the reducing agent.

The engine powered machine according to this embodiment is provided with the system for heating the reducing agent stored in the reducing agent tank 5, specifically, the cooling medium flow passage 8 for guiding a portion of an engine cooling medium to the reducing agent tank 5, a cooling medium temperature detector 9 for detecting the temperature of the engine cooling medium flowing through the cooling medium flow passage 8, the reducing agent heater 10 for heating the reducing agent, which is stored in the reducing agent tank 5, with the heat of the engine cooling medium flowing through the cooling medium flow passage 8, and the on/off device 11 for opening/closing the cooling medium flow passage 8. It is, however, to be noted that these devices may be omitted in an engine powered machine to be used under an environment that the reducing agent does not freeze.

In this embodiment, the reducing agent tank 5 having the cooling fins 5a is used. However, a reducing agent tank 5 which does not have the cooling fins 5a can also be used when the cooling capacity of the cooling fan 7 is sufficiently large.

### Brief Description of the Drawings

[FIG. 1] A constitution diagram of an engine powered machine according to an embodiment.
[FIG. 2] A block diagram showing the constitution of a controller in the embodiment.
[FIG. 3] A cross-sectional view of a reducing agent tank in the embodiment.
[FIG. 4] A table showing operation temperatures of a reducing agent feeder, cooling fan and on/off device in the embodiment.

### Legend

- 1: Engine
- 2: Exhaust pipe
- 3: NOx removal catalyst
- 4: Reducing agent feeder
- 5: Reducing agent tank
- 6: Reducing agent temperature detector
- 7: Cooling fan
- 7a: Rotating blades
- 7b: Motor
- 8: Engine cooling medium flow passage
- 9: Cooling medium temperature detector
- 10: Reducing agent heater
- 11: On/off device
- 12: Controller

## Claims

1. An engine powered machine provided with an NOx removal catalyst arranged in an exhaust passage of an engine to selectively subject to reduction treatment nitrogen oxides that flow through the exhaust passage, a reducing agent tank for storing a reducing agent, a reducing agent feeder for injecting into the exhaust passage the reducing agent stored in the reducing agent tank, a reducing agent temperature detector for detecting a temperature of the reducing agent stored in the reducing agent tank, a cooling fan for cooling the reducing agent tank, and a controller for receiving a detected temperature signal outputted from the reducing agent temperature detector and controlling drive of the cooling fan, wherein:
the controller has an input port for receiving the detected temperature signal, a storage unit in which a cooling initiation temperature for the reducing agent tank is stored, a computing unit for comparing the detected temperature signal with the cooling initiation temperature and, when the detected temperature signal has become equal to or higher than the cooling initiation temperature, outputting a drive signal for the cooling fan, and an output port for outputting the drive signal.

2. The engine powered machine according to claim 1, wherein the reducing agent is a urea water, and the cooling initiation temperature is +35°C.

3. The engine powered machine according to claim 1, wherein the reducing agent tank is provided on an outer wall thereof with cooling fins.

4. The engine powered machine according to claim 1, wherein an electric motor or hydraulic motor is used as a power source for the cooling fan.
